# EUROPÄISCHE PATENTSCHRIFT

(11) **EP 3 640 498 B1**
(45) Veröffentlichungstag und Bekanntmachung des Hinweises auf die Patenterteilung: **03.01.2024**
(21) Anmeldenummer: 19199450.8
(22) Anmeldetag: 25.09.2019
(51) Int. Cl.: F16F 15/173

(54) **VISKOSITÄTS-DREHSCHWINGUNGSDÄMPFER**
VISCOUS TORSIONAL VIBRATION DAMPER
AMORTISSEUR DE VIBRATIONS TORSIONNELLES DE VISCOSITÉ

(30) Priorität: 02.10.2018 DE 102018124383
(43) Veröffentlichungstag der Anmeldung: 22.04.2020
(73) Patentinhaber: Hasse & Wrede GmbH, 12681 Berlin (DE)
(72) Erfinder: KNOPF, Florian, 14199 Berlin (DE); STEIDL, Michael, 10318 Berlin (DE)
(74) Vertreter: Specht, Peter

(56) Entgegenhaltungen:
- EP-A1- 2 824 362
- EP-B1- 2 824 362
- DE-A1- 10 301 707
- DE-U1-202017 100 165
- GB-A- 2 344 398
- GB-A- 2 387 881

## Beschreibung

Die vorliegende Erfindung betrifft einen Viskositäts-Drehschwingungsdämpfer nach dem Oberbegriff des Anspruchs 1.

Viskositäts-Drehschwingungsdämpfer weisen verschiedenste Funktionselemente - nachfolgend auch komponenten genannt - auf.

Da sich der Schwungring relativ zum Primärteil drehen kann, benötigt er zu seiner Lagerung in der Regel wenigstens eine Lagereinrichtung, die eines oder mehrere Lagerelemente aufweist. Ein Viskositäts-Drehschwingungsdämpfer mit solchen Lagerelementen wird beispielsweise in der DE 10 2015 119 A1 und in der DE 195 19 261 A1 beschrieben.

Durch oszillierende Scherung des viskosen Dämpfungsmediums - insbesondere Siliconöl - wird Schwingenergie in Wärme umgewandelt, die durch Konvektion an die umgebende Luft oder ein anderes Kühlmedium abgegeben werden muss, um eine thermische Schädigung des Silikonöls vorzubeugen. In der DE 103 01 707 A1 ist ein Viskositäts-Viskositäts-Drehschwingungsdämpfer mit entsprechenden Kühlkörpern - realisiert als Lüfterflügel - beschrieben.

In der DE 20 2006 019 839 U1 wird ein Viskositäts-Drehschwingungsdämpfer beschrieben, in dessen Dämpfergehäuse eine Riemenscheibe für mehrere Keil- oder einen oder mehrere Keilrippenriemen integriert ist.

Viskositäts-Drehschwingungsdämpfer können noch weitere Komponenten aufweisen. Zu diesen gehört in der Regel z.B. ein Verschlussstopfen, der eine Öffnung zum Einfüllen und Ablassen des Silikonöls in das Dämpfergehäuse verschließt.

Es ergeben sich für eine werkzeuggestützte Fertigung der oben aufgezählten Funktionsträger erhebliche Kosten, die die Kostenstruktur eines Viskositäts-Drehschwingungsdämpfers belasten, die aber auch die konstruktive Gestaltung eines Viskositäts-Drehschwingungsdämpfers nachteilig mitbestimmen können.

Ein Drehschwingungsdämpfer nach dem Oberbegriff des Anspruchs 1 ist aus der EP 2 824 362 A1 bekannt. Zum technologischen Hintergrund seien zudem die GB 2 387 881 und die GB 2 344 881 A genannt.

Ausgehend von dem gattungegemäßen Stand der Technik ist die Aufgabe der vorliegenden Erfindung, einen Viskositäts-Drehschwingungsdämpfer mit optimierter kostengünstiger konstruktiver Gestaltung zu schaffen.

Die Erfindung löst diese Aufgabe durch den Gegenstand des Anspruchs 1.

Ein generatives Fertigungsverfahren synonym - additives Fertigungsverfahren - ist hier ein Fertigungsverfahren, bei dem auf der Basis von dreidimensionalen CAD-Modellen aus bevorzugt formlosem (Flüssigkeiten, Gelen/Pasten, Pulver u.ä.) oder aber ggf. auch formneutralem (band-, drahtförmig, blattförmig) Werkstoff mit chemischen und/oder physikalischen Prozesse ein bzw. das Werkstück erzeugt wird. Dabei sind keine speziellen Werkzeuge erforderlich, welche die jeweilige Kontur bzw. Geometrie des Werkstückes vorgeben (wie z.B. eine Gussform).

Dabei eignen sich insbesondere Stereolithografie, Fused Filament Fabrication bzw. 3D-Druck oder Lasersintern als das generative Fertigungsverfahren.

Derart wird die Herstellung des Viskositäts-Drehschwingungsdämpfers vorteilhaft vereinfacht - weil eines oder mehrere Bauteile bzw. Komponenten des Viskositäts-Drehschwingungsdämpfers auf Grund der Möglichkeiten des gewählten Fertigungsverfahrens bereits montiert sind - und es werden auch die Werkzeugkosten für die Fertigung des Viskositäts-Drehschwingungsdämpfers reduziert.

Es ergibt sich zudem eine größere konstruktive Freiheit, die es erlaubt die Funktionsträger des Viskositäts-Drehschwingungsdämpfers für den jeweiligen Anwendungsfall zu optimieren, da auf vorhandene Werkzeuge und die damit einhergehende (Standard-)Geometrien nicht berücksichtigt werden müssen.

Dabei kann in besonders vorteilhafter Ausgestaltung vorgesehen sein, dass die eine oder mehrere der Komponenten durch ein generatives Fertigungsverfahren hergestellten Komponenten auf wenigstens eine andere vorgefertigt bereitgestellte Komponente bzw. ein vorgefertigt bereitgestelltes Bauteil des Viskositäts-Drehschwingungsdämpfer aufgebracht ist/sind bzw. werden. Derart wird das generative Fertigungsverfahren gezielt ergänzend eingesetzt, um spezielle Komponenten, deren Fertigung und Montage ansonsten relativ kompliziert wäre, an günstiger auf anderen Weise vorfertigbaren Komponenten wie dem relativ schweren Schwungring aus Metall - der ein Gußteil sein kann - oder dem nach einer Ausgestaltung des Primärteils vorgesehenen relativ schweren Dämpfergehäuse aus Metall - das in einem Drückverfahren gefertigt sein kann - nachträglich auszubilden. Das Primärteil - beispielsweise das Dämpfergehäuse (der Schwungring ist dann innen in dem Gehäuse gelagert) oder ein Innenring, der im Wesentlichen radial an die Dämpferkammer angrenzt, wobei der Schwungring in Wesentlichen radial weiter außen angeordnet ist und wobei die Dämpferkammer mit Dichtungen oder dgl. zusätzlich abgedichtet sein kann - kann auch mehrteilig ausgebildet sein. So kann ein Dämpfergehäuse ein Grundteil und einen Deckel aufweisen. Dann kann es vorteilhaft sein, zumindest den Deckel in dem generativen Verfahren, beispielweise an einem vorgefertigten Grundteil, auszubilden.

Es kann nach einer Variante vorteilhaft vorgesehen sein, dass die eine oder mehrere der Komponenten, die durch ein generatives Fertigungsverfahren hergestellt ist/sind eines oder mehrere der Lagerelemente, die den Schwungring relativ zum Primärteil lagern, umfassen.

Dabei ist es besonders vorteilhaft, wenn die Lagerelemente, die den Schwungring relativ zum Primärteil lagern, in dem generativen Fertigungsverfahren auf ein vorgefertigtes Sekundärteil - beispielsweise einen bereitgestellten Schwungring - oder auf ein vorgefertigt bereitgestelltes Primärteil - beispielsweise das Dämpfergehäuse - aufgebracht sind.

Nach einer anderen oder ergänzenden Variante kann vorgesehen sein, dass die eine oder mehrere der Komponenten, die durch ein generatives Fertigungsverfahren hergestellt ist/sind, Kühlkörper umfassen, die an dem Primärteil - beispielsweise dem Dämpfergehäuse - ausgebildet sind. Dabei ist es besonders vorteilhaft, wenn die Kühlkörper durch ein generatives Fertigungsverfahren auf ein vorgefertigt bereitgestelltes Primärteil - beispielsweise ein Dämpfergehäuse - aufgebracht sind.

Durch die generative Fertigung der Kühlkörper lassen sich die Kühlkörper vorteilhaft ohne Werkzeugkosten einstückig außen an das Primärteil, beispielsweise das Dämpfergehäuse, anformen. Dies gestattet zudem eine maximale konstruktive Freiheit in der Gestaltung der Kühlkörper. In einer bevorzugten Ausführungsvariante der Erfindung sind die Kühlkörper Lüfterflügel, zwischen denen Kühlkanäle ausgebildet sind. Diese Kühlkörper werden nach dem Stand der Technik in der Regel aus einem Blech ausgebildet, dass dann auf das Primärteil, beispielsweise das Dämpfergehäuse, oder ein anders geformtes Primärteil aufgesetzt wird. Dies wird durch die Erfindung vermieden. Zudem kann in Bereichen, in denen ansonsten das Blech mit dem Primärteil, insbesondere Dämpfergehäuse, verbunden wird, keine Korrision auftreten, da es keine unlackierten Bereiche unterhalb des Lüfterblechs gibt. Weiterhin kann die Höhe und Anzahl der Lüfterflügel beliebig gewählt werden, während beim Ausstanzen aus einem Blech die Höhe und Anzahl nicht beliebig variiert werden kann.

Dabei sind verschiedenste Anordnungen denkbar. In einer bevorzugten Ausführungsvariante der Erfindung liegen die Kühlkanäle mit ihrer Kanallängsachse jeweils auf Radialen des Primärteils, insbesondere des Dämpfergehäuses. Dadurch werden die Kühlkanäle quer angeströmt und können so eine vorteilhafte Kühlung generieren. In einer weiteren bevorzugten Ausführungsvariante der Erfindung liegen die Kühlkanäle auf zwei verschiedenen konzentrischen Teilkreisen. Dadurch entstehen im Hinblick auf den Kühlluftstrom zwischen den Kühlkanälen vorteilhafte Verwirbelungen, die zu einer optimierten Kühlleistung durch Erzeugung einer turbulenten Strömung beitragen. In einer weiteren bevorzugten Ausführungsvariante der Erfindung ist die radiale Ausdehnung der Kühlkanäle derart gewählt, dass die Kühlkanäle im Flankenbereich des Schwungrings liegen und von der Dämpferkammer durch die Wandung des primärteils, insbesondere eines Dämpfergehäuses bzw. eines Deckels getrennt sind. Dadurch ergibt sich vorteilhaft eine optimale Wärmeabfuhr aus der Dämpferkammer. All dies kann in einem generativen Fertigungsverfahren realisiert werden.

Sodann kann vorgesehen sein, dass die eine oder mehrere der Komponenten, die durch ein generatives Fertigungsverfahren hergestellt ist/sind, eine Profilierung, insbesondere ein Keillriemenprofil, an dem Primärteil, beispielsweise dem Dämpfergehäuse, umfassen. Dabei ist es wiederum vorteilhaft, wenn die Profilierung durch ein ein generatives Fertigungsverfahren durch ein ein generatives Fertigungsverfahren auf ein vorgefertigt bereitgestelltes Primärteil, inbesondere Dämpfergehäuse, aufgebracht ist.

Es kann vorteilhaft vorgesehen sein, dass die Lagerelemente und/oder die Kühlkörper und/oder das Keillriemenprofil aus Kunststoff hergestellt sind und auf ein vorgertigt bereitgstelltes Bauteil aus Metall aufgebracht sind. Denkbar ist aber auch, dass die Lagerelemente und/oder die Kühlkörper und/oder das Keillriemenprofil aus Metall hergestellt sind und auf ein vorgertigt bereitgstelltes Bauteil aus Metall aufgebracht sind.

Nach einer weiteren Variante kann vorgesehen sein, dass die eine oder mehrere der Komponenten, die durch ein generatives Fertigungsverfahren hergestellt ist/sind, einen Deckel für das Dämpfergehäuse als Primärteil umfassen, der auf ein vorgefertigt bereitgestelltes Dämpfergehäuse aufgebracht ist. Auch der Deckel kann aus Kunststoff oder Metall bestehen.

Denkbar ist schließlich auch, dass sogar wenigstens eine oder beide der Komponenten Primärteil - beispielsweise Dämpfergehäuse oder ein anders geformtes Primärteil - und Schwungring durch ein generatives Fertigungsverfahren hergestellt ist/sind.

Weitere vorteilhafte Ausgestaltungen der Erfindung sind den Unteransprüchen zu entnehmen.

Nachfolgend wird die Erfindung anhand von Ausführungsbeispeilen unter Bezug auf die Zeichnungen näher beschrieben. Auf dieses Ausführungsbeispiel ist die Erfindung nicht beschränkt. Es zeigen:
- Fig. 1:: eine Vorderansicht im Schnitt eines erfindungsgemäßen Viskositäts-Drehschwingungsdämpfers;
- Fig. 2:: eine Vorderansicht im Schnitt einer Ausführungsvariante des ViskositätsDrehschwingungsdämpfers aus Fig. 1;
- Fig. 3: eine Vorderansicht im Schnitt einer weiteren Ausführungsvariante des Viskositäts-Drehschwingungsdämpfers aus Fig. 1.

In Folgenden werden verschiedene Viskositäts-Drehschwingungsdämpfer beschrieben. Diese weisen verschiedene Komponenten bzw. Funktionsträger auf. Eine Komponente im Sinne der vorliegenden Erfindung ist ein konstruktives Merkmal oder eine geometrische Ausprägung, mit der eine Funktion des Viskositäts-Drehschwingungsdämpfer erzeugt wird bzw. zur Verfügung gestellt wird. Solche Funktionen können z.B. Lagern, Kühlen, Drehmomentübertragen, Sekundärmasse zur Verfügung stellen, Primärmasse zur Verfügung stellen sowie Verschließen und Sichern sein. Entsprechende Funktionsträger sind z.B. Lagerelemente, Gehäuse, Schwungring, Kühlkörper, Profilierungen, Nuten für Riemen oder Verzahnungen sowie Verschlüsse oder Deckel.

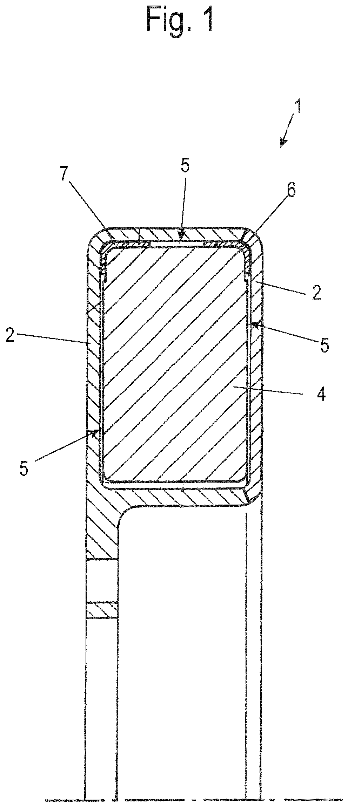

**Fig. 1** zeigt einen Viskositäts-Viskositäts-Drehschwingungsdämpfer 1 mit einem ringförmigen Primärteil zur Befestigung an einer Welle, isnbesondere einer Krubelwelle eines Motors.

Hier ist das Primärteil als ein ringartiges Dämpfergehäuse ausgestaltet. Auf diese konstruktive Ausgestaltung ist die Erfindung aber nicht bescränkt. Das Primärteil kann vielmehr auch eine andere, in der Regel ringförmige, Geometrie aufweisen.

Das primärteil, hier das Dämpfergehäuse 2 begrenzt eine Dämpferkammer 3. Das Dämpfergehäuse 2 kann einen Deckel 3 aufweisen. Das Dämpfergehäuse 2 ist mit einer hier nicht dargestellten Maschinenwelle - insbesondere einer Kurbelwelle eines Verbrennungsmotors - verbindbar, deren Drehschwingungen gedämpft werden sollen. An die Dämpferkammer grenz ferner ein unbegrenzt oder begrenzt relativ zum Primärteil drehbarer Schwungring an.

Hier ist dazu in die Dämpferkammer 3 ein umfangsgeschlossener Schwungring 4 eingesetzt. Dieser Schwungring 4 weist hier in bevorzugter - nicht aber zwingender - Ausgestaltung einen im Wesentlichen rechteckigen Querschnitt auf. Bei einer anderen Ausgestaltung des Primärteils kann der Schwungring besipielsweise alternativ ganz oder teilweise radial weiter außen als das Primärteil angeordnet sein (hier nicht dargestellt).

Zwischen einer Innenwand der Dämpferkammer 3 und dem Schwungring 4 ist in der Dämpferkammer 3 ein Scherspalt 5 ausgebildet, der mit einem viskosen Dämpfungsmedium, insbesondere einem viskosen Fluid, wie z.B. Silikonöl befüllt ist.

Das Primärteil - hier der Schwungring 4 - wird durch wenigstens eine oder mehrere Lagereinrichtung(en) beweglich gelagert, hier in der Dämpferkammer 3 beweglich gelagert. Diese Lagereinrichtung ist/sind zwischen dem Schwungring 4 und der Innenwand des Dämpfergehäuses 2 angeordnet. Die Lagereinrichtung weist Lagerelemente 6, 7 auf, die jeweils als umfangsgeschlossener Ring ausgebildet sein können. Alternativ können die Lagerelemente 6, 7 aber auch jeweils mehrfach am Umfang des Schwungrings 4 als Lagersegmente ausgebildet sein. Die Lagerelemente 6, 7 weisen hier beispielhaft jeweils einen L-förmigen Querschnitt auf und dienen dazu, den Schwungring 3 in der Dämpferkammer 3 relativ zum Dämpfergehäuse 2 drehbar zu lagern.

Diese Lagerelemente 6, 7 sind vorzugsweise aus Kunststoff oder Metall hergestellt und bilden jeweils Gleitlager aus.

Es ist vorzugsweise vorgesehen, dass eine oder mehrere oder sämtliche der Lagerelemente 6, 7 durch ein generatives Fertigungsverfahren hergestellt sind.

Die derart hergestellten Lagerelemente 6, 7 können durch das generative Fertigungsverfahren (ohne ein dazu nötiges Gießwerkzeug) an das Dämpfergehäuse 2 oder an den Schwungring 4 angefügt sein, so dass ein separates Fügeverfahren entfallen kann.

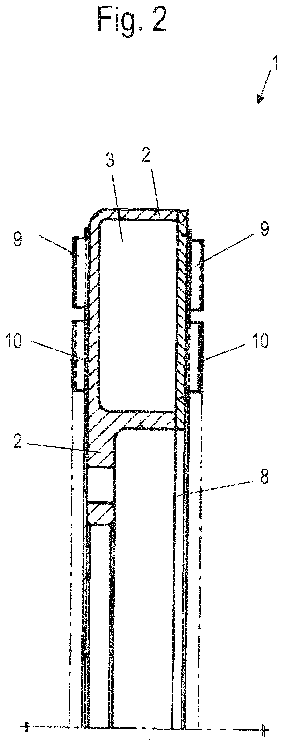

**Fig. 2** zeigt eine Vorderansicht im Schnitt einer Ausführungsvariante des Viskositäts-Drehschwingungsdämpfers 1 aus Fig. 1. Die in der Schnittansicht nach Fig. 2 rechte Seite der Dämpferkammer 3 des Dämpfergehäuses 2 ist hier durch einen Deckel 8 verschlossen. Das Dämpfergehäuse 2 kann auch einstückig -also ohne Deckel 8-ausgeführt sein (siehe Fig. 1).

Wenigstens eine der Planaußenseiten des Dämpfergehäuses 2 weist -im dargestellten Ausführungsbeispiel beiden Planseiten- einer Vielzahl von Kühlkörpern auf, die hier als Kühlkanälen 9, 10 ausgebildet sind. Die Kühlkanäle 9, 10 liegen mit ihrer Kanallängsachse jeweils auf Radialen des Dämpfergehäuses 2.

Die Kühlkanäle 9, 10 können im Hinblick auf den Viskositäts-Drehschwingungsdämpfer 1 auf konzentrischen Teilkreisen liegen. Die radiale Ausdehnung der Kühlkanäle 9, 10 ist derart gewählt, dass die Kühlkanäle 9, 10 im Flankenbereich des Schwungrings 4 (hier nicht dargestellt, siehe Fig. 1) liegen und von der Dämpferkammer 3 durch die Wandung des Dämpfergehäuses 2 bzw. des Deckels 8 getrennt sind. Hierdurch wird eine Wärmeübertragung vom Dämpfungsmittel auf die Kühlkanäle 9, 10 auf kürzestem Weg ermöglicht.

Es kann vorgesehensein, dass die Kühlkanäle 9, 10 durch ein generatives Fertigungsverfahren, wie z.B. Stereolithografie, Fused Filament Fabrication -auch unter dem Begriff 3D-Druck bekannt- oder Lasersintern hergestellt sind. Vorzugsweise sind die Kühlkanäle 9, 10 aus einem metallischen Werkstoff hergestellt, der eine hohe spezifische Wärmekapazität aufweist.

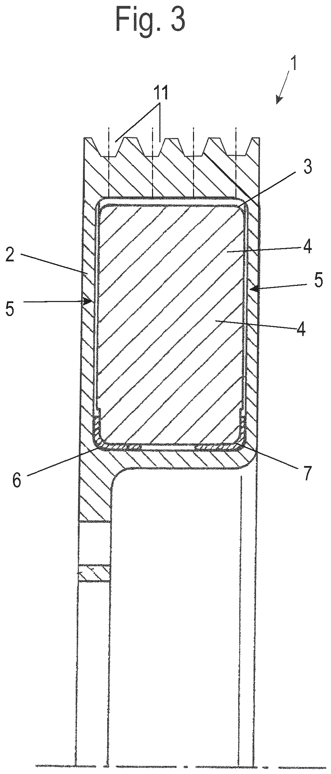

**Fig. 3** zeigt eine Vorderansicht im Schnitt einer weiteren Ausführungsvariante des Viskositäts-Drehschwingungsdämpfers 1 aus Fig. 1.

Der radiale Außenumfang des Dämpfergehäuses 2 weist hier eine Profilierung mit mehreren keilförmigen Nuten 11 zur Aufnahme mehrerer Keilriemen auf. Alternativ kann der Außenumfang des Dämpfergehäuses 2 auch mehrere keilförmige Nuten 11 für einen oder mehrere Keilrippemriemen aufweisen. Über die so funktionsintegrativ gebildete Riemenscheibe sind durch Keil- oder Keilrippenriemen Nebenaggregate des Verbrennungsmotors, wie z.B. eine Kühlwasserpumpe antreibbar.

Es kann vorgesehen sein, dass die Profilierung bzw. damit auch die entstehenden Nuten 11 durch ein generatives Fertigungsverfahren, wie z.B. Stereolithografie, Fused Filament Fabrication -auch unter dem Begriff "3D-Druck" bekannt- oder Lasersintern ausgebildet werden. Vorzugsweise sind die Flanken und Gründe der Nuten 11 aus einem metallischen Werkstoff hergestellt.

Es ist denkbar, auch andere oer weitere Funktionsträger des Viskositäts-Drehschwingungsdämpfers 1 jeweils durch ein generatives Fertigungsverfahren herzustellen.

Denkbar ist beispielsweise, auch das Dämpfergehäuse 2 und den Schwungring 4 durch ein generatives Fertigungsverfahren oder additives Fertigungsverfahren herzustellen.

### BEZUGSZEICHENLISTE

- 1: Viskositäts-Drehschwingungsdämpfer
- 2: Dämpfungsgehäuse
- 3: Dämpferkammer
- 4: Schwungring
- 5: Scherspalt
- 6: Lagerelement
- 7: Lagerelement
- 8: Deckel
- 9: Kühlkanal
- 10: Kühlkanal
- 11: Nut

## Patentansprüche

1. Viskositäts-Drehschwingungsdämpfer (1), der zumindest folgende Komponenten aufweist:
a) ein ringförmiges Primärteil (2), das an eine Dämpferkammer (3) angrenzt;
b) einen an die Dämpferkammer (3) angrenzenden Schwungring (4), der relativ zum Primärteil zumindest begrenzt bweglich, insbesondere drehbar ist, wobei die Dämpferkammer (3) einen mit einem viskosen Fluid gefüllten Scherspalt (5) zwischen dem Schwungring (4) und dem Primärteil (2) ausbildet,
c) wobei wenigstens eine oder mehrere der Komponenten (2, 3, 4, 6, 7) durch ein generatives Fertigungsverfahren hergestellt ist/sind,
**dadurch gekennzeichnet, dass**
d) dass die eine oder mehrere der Komponenten (2, 3, 4, 6, 7), die durch ein generatives Fertigungsverfahren hergestellt ist/sind, einen oder mehrere Kühlkörper (9, 10) umfassen, die an dem Primärteil (2) ausgebildet sind und/oder die eine oder mehrere der Komponenten (2, 3, 4, 6, 7), die durch ein generatives Fertigungsverfahren hergestellt ist/sind, eine Profilierung, insbesondere ein Keillriemenprofil, an dem Primärteil umfassen und/oder dass die eine oder mehrere der Komponenten (2, 3, 4, 6, 7), die durch ein generatives Fertigungsverfahren hergestellt ist/sind, einen Deckel (8) für ein Dämpfergehäuse als das Primärteil umfassen, der auf ein vorgefertigt bereitgestelltes Dämpfergehäuse (2) aufgebracht ist.

2. Viskositäts-Drehschwingungsdämpfer (1) nach Anspruch 1, **dadurch gekennzeichnet, dass** er weiter folgende Komponenten aufweist: ein oder mehrere Lagerelemente (6, 7), die den Schwungring (4) relativ zum Primärteil lagern.

3. Viskositäts-Drehschwingungsdämpfer (1) nach Anspruch 1 oder 2, **dadurch gekennzeichnet, dass** die eine oder mehrere der Komponenten (2, 3, 4, 6, 7) durch ein generatives Fertigungsverfahren hergestellten Komponenten auf wenigstens eine andere vorgefertigt bereitgestellte Komponente bzw. ein vorgefertigt bereitgestelltes Bauteil des Viskositäts-Drehschwingungsdämpfers (1) aufgebracht ist/sind.

4. Viskositäts-Drehschwingungsdämpfer (1) nach Anspruch 3, **dadurch gekennzeichnet, dass** die eine oder mehrere der Komponenten (2, 3, 4, 6, 7), die durch ein generatives Fertigungsverfahren hergestellt ist/sind eines oder mehrere der Lagerelemente (6, 7) umfassen.

5. Viskositäts-Drehschwingungsdämpfer (1) nach Anspruch 4, **dadurch gekennzeichnet, dass die** Lagerelemente (6, 7), die den Schwungring (4) lagern, in dem generativen Fertigungsverfahren auf einen vorgefertigt bereitgestellten Schwungring oder auf das vorgefertigt bereitgestellte Primärteil aufgebracht sind.

6. Viskositäts-Drehschwingungsdämpfer (1) nach einem der vorstehenden Ansprüche, **dadurch gekennzeichnet, dass** die Kühlkörper (9, 10) durch ein ein generatives Fertigungsverfahren auf ein vorgefertigt bereitgestelltes Primärteil aufgebracht sind.

7. Viskositäts-Drehschwingungsdämpfer (1) nach einem der vorgenannten Ansprüche, **dadurch gekennzeichnet, dass** die Profilierung durch ein ein generatives Fertigungsverfahren durch ein ein generatives Fertigungsverfahren auf ein vorgefertigt bereitgestelltes Primärteil aufgebracht ist.

8. Viskositäts-Drehschwingungsdämpfer (1) nach einem der vorgenannten Ansprüche, **dadurch gekennzeichnet, dass** die Lagerelemente (6, 7) und/oder die Kühlkörper und/oder das Keillriemenprofil aus Kunststoff hergestellt sind und auf ein vorgertigt bereitgstelltes Bauteil aus Metall aufgebracht sind.

9. Viskositäts-Drehschwingungsdämpfer (1) nach einem der vorgenannten Ansprüche, **dadurch gekennzeichnet, dass** die Lagerelemente (6, 7) und/oder die Kühlkörper und/oder das Keillriemenprofil aus Metall hergestellt sind und auf ein vorgertigt bereitgstelltes Bauteil aus Metall aufgebracht sind.

10. Viskositäts-Drehschwingungsdämpfer (1) nach einem der vorgenannten Ansprüche, **dadurch gekennzeichnet, dass** wenigstens eine oder mehrere der Komponenten (2, 3, 4, 6, 7) Primärteil (2) und Schwungring (3) durch ein generatives Fertigungsverfahren hergestellt ist/sind.

## Claims

1. A viscosity torsional vibration damper (1) having at least the following components:
a) an annular primary part (2) that adjoins a damper chamber (3);
b) an inertia ring (4) that adjoins the damper chamber (3) and can be moved, in particular rotated, to a limited extent in relation to the primary part, the damper chamber (3) forming a shear gap (5) filled with a viscous fluid between the inertia ring (4) and the primary part (2);
c) at least one or more of the components (2, 3, 4, 6, 7) being produced by means of a generative manufacturing process.
**characterised in that**
d) the one or more of the components (2, 3, 4, 6, 7) produced by means of a generative manufacturing process comprises/comprise one or more heatsinks (9, 10) that is/are formed on the primary part (2) and/or the one or more of the components (2, 3, 4, 6, 7) that is/are produced by means of a generative manufacturing process has/have a profile, in particular a V-belt profile, on the primary part (2), and/or that the one or more of the components (2, 3, 4, 6, 7) that is/are produced by means of a generative manufacturing process has/have a cover (8) for a damper housing as the primary part, this cover (8) being placed on a damper housing (2) that is provided in prefabricated form.

2. A viscosity torsional vibration damper (1) according to claim 1, **characterised in that** it further has the following components: one or more bearing elements (6, 7) by means of which the inertia ring (4) is mounted on the primary part (2).

3. A viscosity torsional vibration damper (1) according to claim 1 or 2, **characterised in that** the one or more of the components (2, 3, 4, 6, 7) that is/are produced by means of a generative manufacturing process is/are applied to at least one other component that is provided in prefabricated form or to a component part of the viscosity torsional vibration damper (1) that is provided in prefabricated form.

4. A viscosity torsional vibration damper (1) according to claim 3, **characterised in that** the one or more of the components (2, 3, 4, 6, 7) that is/are produced by means of a generative manufacturing process comprises/comprise one or more of the bearing elements (6, 7).

5. A viscosity torsional vibration damper (1) according to claim 4, **characterised in that,** in the generative manufacturing process, the bearing elements (6, 7) on which the inertia ring (4) is mounted are applied to an inertia ring that is provided in prefabricated form or to the primary part that is provided in prefabricated form.

6. A viscosity torsional vibration damper (1) according to any one of the preceding claims, **characterised in that** the heat sinks (9, 10) are applied by means of a generative manufacturing process to a primary part that is provided in prefabricated form.

7. A viscosity torsional vibration damper (1) according to any one of the preceding claims, **characterised in that** the profile is applied by means of a generative manufacturing process to a primary part that is provided in prefabricated form.

8. A viscosity torsional vibration damper (1) according to any one of the preceding claims, **characterised in that** the bearing elements (6, 7) and/or the heatsinks (9, 10) and/or the V-belt are made of plastic and are applied to a metal component that is provided in prefabricated form.

9. A viscosity torsional vibration damper (1) according to any one of the preceding claims, **characterised in that** the bearing elements (6, 7) and or the heatsinks and/or the V-belt profile are made of metal and are applied to a metal component that is provided in prefabricated form.

10. A viscosity torsional vibration damper (1) according to any one of the preceding claims, **characterised in that** at least one or more of the components (2, 3, 4, 6, 7), primary part (2) and inertia ring (3) are produced by means of a generative manufacturing process.

## Revendications

1. Amortisseur (1) de vibration en torsion à viscosité, qui a au moins les éléments suivants :
a) une partie (2) annulaire primaire, qui est voisine d'une chambre (3) d'amortisseur ;
b) un volant (4), qui est voisin de la chambre (3) d'amortisseur et qui est mobile, en particulier tournant, au moins d'une manière limitée par rapport à la partie primaire, dans lequel la chambre (3) d'amortisseur forme un intervalle (5) de cisaillement rempli de fluide visqueux entre le volant (4) et la partie (2) primaire,
c) dans lequel, au moins un ou plusieurs des éléments (2, 3, 4, 6, 7) et/ou sont fabriqués par un procédé de fabrication génératif,
**caractérisé en ce que**
d) le un ou les plusieurs des éléments (2, 3, 4, 6, 7), est/sont fabriqué(s) par un procédé de fabrication génératif comprennent un ou plusieurs refroidisseurs (9,10), qui sont constitués sur la partie (2) primaire et/ou le un ou les plusieurs des éléments (2, 3, 4, 6, 7), qui est/sont fabriqué(s) par un procédé de fabrication génératif comprennent un profilage, en particulier un profil de courroie trapézoïdale, sur la partie primaire et/ou **en ce que** le un ou les plusieurs des éléments (2, 3, 4, 6, 7), qui est/sont fabriqué(s) par un procédé de fabrication génératif comprennent un couvercle (8) d'une enveloppe d'amortisseur comme partie primaire, qui est déposé sur une enveloppe (2) d'amortisseur déjà préfabriquée.

2. Amortisseur (1) de vibration en torsion à viscosité suivant la revendication 1, **caractérisé en ce qu'**il a, en outre, des éléments suivants : un ou plusieurs éléments (6, 7) de montage, qui montent le volant (4) par rapport à la partie primaire.

3. Amortisseur (1) de vibration en torsion à viscosité suivant l'une des revendications 1 ou 2, **caractérisé en ce qu'**un ou plusieurs des éléments (2, 3, 4, 6, 7) est/sont déposé(s) par un élément fabriqué par un procédé de fabrication génératif sur au moins un autre composant déjà préfabriqué ou sur une pièce déjà préfabriquée de l'amortisseur (1) de vibration en torsion à viscosité.

4. Amortisseur (1) de vibration en torsion à viscosité suivant la revendication 3, **caractérisé en ce qu'**un ou plusieurs des éléments (2, 3, 4, 6, 7), qui est/sont fabriqués par un procédé de fabrication génératif, comprennent un ou plusieurs des éléments (6, 7) de montage.

5. Amortisseur (1) de vibration en torsion à viscosité suivant la revendication 4, **caractérisé en ce que** les éléments (6, 7) de montage, qui montent le volant (4), sont déposés dans le procédé de fabrication génératif sur un volant déjà préfabriqué ou sur la partie primaire déjà préfabriquée.

6. Amortisseur (1) de vibration en torsion à viscosité suivant l'une des revendications précédentes, **caractérisé en ce que** les refroidisseurs (9, 10) sont déposés par un procédé de fabrication génératif sur une partie primaire déjà préfabriquée.

7. Amortisseur (1) de vibration en torsion à viscosité suivant l'une des revendications précédentes, **caractérisé en ce que** le profilage est déposé par un procédé de fabrication génératif sur une partie primaire déjà préfabriquée par un procédé de fabrication génératif.

8. Amortisseur (1) de vibration en torsion à viscosité suivant l'une des revendications précédentes, **caractérisé en ce que** les éléments (6, 7) de montage et/ou les refroidisseurs et/ou le profil de courroie trapézoïdale sont fabriqués en matière plastique et sont déposés sur une pièce déjà préfabriquée en métal.

9. Amortisseur (1) de vibration en torsion à viscosité suivant l'une des revendications précédentes, **caractérisé en ce que** les éléments (6, 7) de montage et/ou les refroidisseurs et/ou le profil en courroie trapézoïdale sont fabriqués en métal et sont déposés sur une pièce déjà préfabriquée en métal.

10. Amortisseur (1) de vibration en torsion à viscosité suivant l'une des revendications précédentes, **caractérisé en ce qu'**au moins un ou plusieurs des éléments (2, 3, 4, 6, 7), partie (2) primaire et volant (3), est/sont fabriqué(s) par un procédé de fabrication génératif.
